# EUROPEAN PATENT SPECIFICATION

(11) **EP 3 831 538 B1**
(45) Date of publication and mention of the grant of the patent: **06.12.2023**
(21) Application number: 19841577.0
(22) Date of filing: 12.04.2019
(51) Int. Cl.: B25F 5/00, A47L 9/28, B27G 3/00

(54) **ELECTRIC WORK MACHINE**
ELEKTRISCHE ARBEITSMASCHINE
MACHINE DE TRAVAIL ÉLECTRIQUE

(30) Priority: 27.07.2018 JP 2018141027
(43) Date of publication of application: 09.06.2021
(73) Proprietor: Koki Holdings Co., Ltd., Tokyo 108-6020 (JP)
(72) Inventor: ITO Tatsuya, Hitachinaka-City, Ibaraki 312-8502 (JP); HAYAMA Yoshimasa, Hitachinaka-City, Ibaraki 312-8502 (JP); HARADA Kenta, Hitachinaka-City, Ibaraki 312-8502 (JP)
(74) Representative: Meissner Bolte Partnerschaft mbB
(86) International application number: PCT/JP2019/015941
(87) International publication number: WO 2020/021787

(56) References cited:
- JP-A- 2014 072 756
- JP-A- 2015 030 060
- JP-A- 2016 112 669
- JP-A- 2017 215 858
- JP-A- 2018 069 431
- US-A1- 2016 175 895

## Description

### BACKGROUND OF THE INVENTION

### 1. Field of the Invention

The invention relates to an electric work machine, and particularly to a plurality of electric work machines which can be easily linked to operate by using wireless communication.

### 2. Description of Related Art

In order to suck the dust generated during an operation using an electric work machine, such as a circular saw or a jigsaw, by using another electric work machine, such as a dust collector, a linking system is realized, so that the electric work machine and the dust collector are connected via a dust collecting hose, and the driving on the side of one of the electric work machines is linked to drive another electric work machine. In such a linking operation, the another electric work machine (e.g., the dust collector or a blower fan) to be configured on the slave side is prepared for the electric work machine to be configured on the master side (e.g., the circular saw or the jigsaw), and the slave-side electric work machine is operated by linking with the operation of the master-side electric work machine. In such a linking system, as a method for linking the slave-side electric work machine and the master-side electric work machine, as disclosed in Patent Document 1, a configuration in which the driving power of the master-side electric work machine is supplied from the slave-side electric work machine by connecting the power cord of the master-side electric work machine (circular saw) to the slave-side electric work machine (dust collector) is set, and the slave-side electric work machine itself is operated by determining that it drives the master-side electric work machine at the time when the slave-side electric work machine outputs power. US 2016/175895 A1 discloses an electric power tool that includes a wireless transmission unit and a transmission control unit. The transmission control causes the wireless transmission unit to transmit a linking signal to a dust collector to thereby cause the dust collector to operate in a linked manner. An operation mode of the transmission control unit is shifted from a normal mode to a pairing mode by operation of an operation unit.

### [Prior art document(s)]

### [Patent document(s)]

Patent Document 1: Japanese Laid-open No. 2010-155302

### SUMMARY OF THE INVENTION

### [Problems to be solved]

In the configuration of Patent Document 1, in order to transmit the driving information of the master-side electric work machine to the slave-side electric work machine, the power cord is required. Therefore, the issue that a battery-driven electric work machine without a power cord is not applicable arises. Therefore, in recent years, in order for linked operation of the battery-driven electric work machine, a means of transmitting the operation information of the master-side electric work machine to the slave-side electric work machine by using wireless communication has been proposed. Nevertheless, in the case of linking by using wireless communication, the setting registrations for the electric work machine to be configured on the master side and the electric work machine to be configured on the slave side are required, and the issue that these registration operations (pairing) are troublesome arises. In addition, in the case where there are respectively a plurality of electric work machines on the master side and the slave side, there is a concern of registering an unintended combination of electric work machines.

The invention has been made in view of the above background, and the objective of the invention is to provide an electric work machine and a wireless linking system of electric work machines with favorable operability in pairing registration for a wireless linked operation. Another objective of the invention is to provide an electric work machine in which redoing pairing registration for a linked operation is easy. Yet another objective of the invention is to provide an electric work machine in which the number of button operations required for a linked operation is reduced.

### [Means for solving the problem]

The representing features of the invention disclosed in the present application will be described below. The present invention is defined by independent claim 1 as appended.

According to another characteristic of the invention, in a case where the switch is set to the linked operation mode at a time when a power is turned on, and in a case where a communication circuit set during operation in the linked operation mode is cut off while the electric work machine is linked with the another electric work machine, the control unit transitions to the search state that searches for an external electric work machine that is able to communicate and connects again with any other electric work machine that is detected. In addition, whether the electric work machine carries out linked control as a master of the another electric work machine or carries out linked control as a slave of the another electric work machine is defined in advance. The electric work machine on a master side searches for only the electric work machine on a slave side that is linkable and external. The electric work machine on the slave side searches for only the electric work machine on the master side that is linkable and external. In addition, the control unit maintains the linked state after storing identification information of the another electric work machine that is linked in the linked operation mode that is the linked state. If the linked state is transitioned from the search state during setting of the linked operation mode, the control unit cancels the identification information and starts to search for another electric work machine that is linkable again.

According to yet another feature of the invention, if the switch is switched from the linked operation mode to the independent operation mode in the linked state, the control unit cancels the identification information of the target-side electric work machine and disconnects the connection with the target side. In addition, the electric work machine is provided with a detachable battery pack that supplies power to the motor. At a time when the battery pack is removed in the linked state, an external electric work machine that is in communication is disconnected, and at a time when another battery pack is installed, another search for another electric work machine that is linkable is started. That is, in the case of the electric work machine whose power is not maintained during the exchange of battery packs, if the power is restored from a cutoff state, another electric work machine that is linkable is automatically searched and connected. The communication unit may not be provided inside the electric work machine body, but may be provided in the detachable battery pack. In this case, the operation of the electric work machine may be transmitted to another electric work machine via the communication unit in the battery pack. According to the above, in the invention, a wireless linking system including the master-side electric work machine and one or more slave-side electric work machines is realized, and the ON/OFF control of the slave-side electric work machine can be easily realized by linking with the ON or OFF of the master-side electric work machine.

### [Inventive effect]

According to the invention, a linked operation for a wide range of electric work machines and dust collectors can be performed easily, and the operability in the linked operation between the electric work machine and the dust collector can be facilitated. Specifically, since the pairing registration is automatically performed only with the switching by the operator from the independent operation mode to the linked operation mode, it is not necessary for the operator to long-press a mode switching switch to perform pairing. In addition, since it is not necessary to provide a specialized pairing operation button different from the mode switching switch in order to perform pairing, an electric work machine with a simple and easy-to-use operation panel can be realized.

### BRIEF DESCRIPTION OF THE DRAWINGS

FIG. 1 is a perspective view illustrating a wireless linking system of electric work machines according to an embodiment of the invention.
FIG. 2 is a side view (a partial cross-sectional view) of a circular saw 10 of FIG. 1.
FIG. 3 is a schematic circuit block diagram of the circular saw 10 of FIG. 1.
FIG. 4 is a front view of a dust collector 50 of FIG. 1.
FIG. 5 is a schematic circuit block diagram of the dust collector 50 of FIG. 1.
FIG. 6 is a view illustrating an operation panel 27 of the circular saw 10 of FIG. 1.
FIG. 7 is a view illustrating an operation display unit 60 of the dust collector 50 of FIG. 4.
FIG. 8 is a diagram illustrating timings of operations of respective electric work machines (the circular saw 10, the dust collector 50) in the wireless linking system of the embodiment.
FIG. 9 is a diagram illustrating state transitions of operation modes of the respective electric work machines (the circular saw 10, the dust collector 50).
FIG. 10 is a flowchart illustrating procedures of the circular saw 10.
FIG. 11 is a connection circuit configuration diagram of an electric work machine body and a battery pack according to another embodiment of the embodiment.

### DESCRIPTION OF THE EMBODIMENTS

### Embodiment 1

In the following, an embodiment of electric work machines and a wireless linking system of the electric work machines will be described in detail with reference to the drawings. Identical or equivalent forming elements, members, etc., in the respective drawings are labeled with identical symbols, and repeated descriptions will be omitted as appropriate. In addition, the embodiment does not serve to limit the invention, but should serve as an exemplification, and all the features and combinations thereof described in the embodiment are not limited as being necessarily essential to the invention.

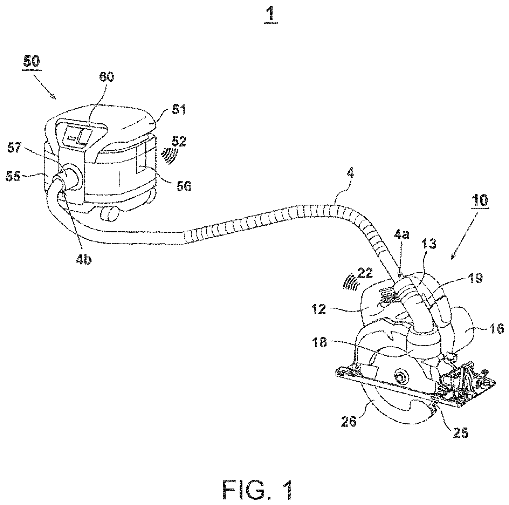

FIG. 1 is a schematic perspective view illustrating a configuration example of a wireless linking system 1 of electric work machines in the embodiment. The wireless linking system 1 is configured by electric work machines that are linked and driven as a pair. Here, a circular saw 10 is used as a master-side electric work machine, and a dust collector 50 is used as a slave-side electric work machine. The circular saw 10 and the dust collector 50 are electric work machines that can be driven independently by using independent driving sources. At the time when two or more electric work machines are linked and operated, an electric work machine that performs a start command and an end command for the operation is set as the "master-side" electric work machine, whereas the "slave-side" electric work machine is operated to follow the command from the master-side electric work machine.

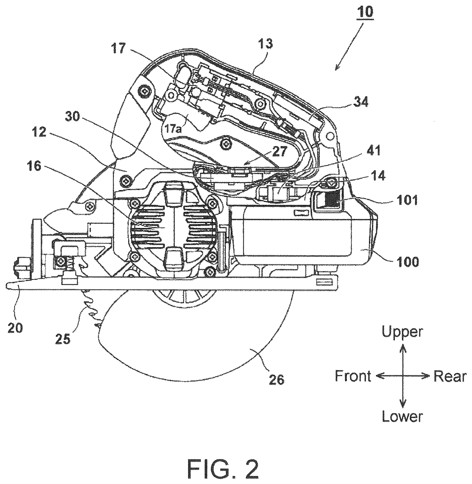

The circular saw 10 is a tool for cutting an object to be cut, such as wood, by rotating, at a high speed, a saw blade 25 as a disc-shaped working device formed by a plurality of steeple blades on the outer peripheral side by a motor not shown herein. Regarding the power of the circular saw 10, while those using a commercial power source and those using a battery are widely known, a detachable battery pack 100 (to be described in FIG. 2) is used in the embodiment. The upper portion of a housing 12 of the circular saw 10 is formed with a handle unit 13 for an operator to hold. The front lower portion of the handle unit 13 is provided with a trigger lever 17a (to be described in FIG. 2) for operating a switch of the motor, and the object to be cut can be cut linearly when the operator presses a base 20 and the saw blade 25 against the object to be cut and pulls a trigger lever 17a. The housing 12 covers the approximately upper half of the vicinity of the outer periphery of the saw blade 25. A protection cover 26 is disposed around the approximately lower half of the saw blade 25 to provide protection so as not to expose the blade of the saw blade 25 at the time when the saw blade 25 is not pressed against the object to be cut.

When an operation of cutting wood is performed by using the circular saw 10, many wood wastes are generated during the cutting process. The portion where the housing 12 covers the approximately upper half of the saw blade 25 has a function of preventing dust, such as wood wastes, from scattering. In addition, a portion of the housing 12 can be attached to a duct adapter 18. The duct adapter 18 forms a suction passage for sucking the dust generated due to the cutting operation together with the surrounding air, and the duct adapter 18 forms an air passage from an inner side portion of the housing 12 to a connection tube 19, so that the connection tube 19 extends from the vicinity of a portion of the outer periphery of the saw blade 25 toward the radially outer side. A terminal 4b of a flexible dust collecting hose 4 can be connected to the connection tube 19.

The dust collector 50 is an electric work machine which rotates a dust collecting fan (not shown) by a motor, generates a negative pressure in the dust collecting hose 4, sucks cut chips and dust generated during the cutting operation, together with air, from the inner side of the duct adapter 18 connected to a tip terminal 4a of the dust collecting hose 4, separates the cut chips or dust from the air by an air filter (not shown), and collects only the cut chips or dust in a container. A main switch is provided on an operation display unit 60 of the dust collector 50, and the motor is started when the main switch is turned on (at the time of the independent operation mode). When the motor rotates, the dust collecting operation starts, and dust, etc., can be sucked via the dust collecting hose 4. When the operator turns off the main switch, the motor is stopped and the dust collecting operation is also stopped. The dust collector 50 is not only used in the independent operation mode in which the dust collector 50 is operated independently, but can also be operated in conjunction as the slave side of another electric work machine, as shown in FIG. 1. In this case, by installing the tip terminal 4a of the dust collecting hose 4 to the connection tube 19 of the duct adapter 18 and operating a specialized switch (to be described afterwards) of the operation display unit 60, the "independent operation mode" is switched to the "linked operation mode". At this time, by also operating a switch of an operation panel (not shown in the drawing) on the side of the circular saw 10, which is the master-side electric work machine, the "independent operation mode" is switched to the "linked operation mode", and if the circular saw 10 and the dust collector 50 are mutually switched to the "linked operation mode", the circular saw 10 and the dust collector 50 can be automatically paired and registered, and linked wirelessly.

By linking the two electric work machines in this way, the main operation (the cutting operation by the circular saw 10) is performed by the electric work machine on one side (master side), and the subordinate operation (the operation of sucking and collecting the dust generated by the circular saw 10) is performed by the electric work machine on the other side (slave side). Here, the ON/OFF of the motor of the slave-side electric work machine (the dust collector 50) is linked with ON or OFF of the trigger switch of the master-side electric work machine (circular saw 10). In order to link and operate the multiple electric work machines, each of the electric work machines (the circular saw 10 and the dust collector 50) is provided with a communication part for performing wireless communication. The slave-side electric work machine (the dust collector 50) which receives a working command via wireless communications 22 and 52 from the master-side electric work machine (the circular saw 10) is operated according to the working command. Here, the dust collector 50 enters the standby state when being set to the linked operation mode. If the trigger switch of the circular saw 10 is turned on, the working command signal with respect to the dust collector 50 is transmitted from the communication part of the circular saw 10, and the dust collector 50 receives the working command signal, starts the motor, and starts the dust collecting operation. If the trigger switch of the circular saw 10 is turned off, the working command signal from the communication part of the circular saw 10 disappears. Therefore, the dust collector 50 stops, directly or after a predetermined time lag, the motor to stop the dust collecting operation. In this way, in the embodiment, since the linked operation is performed between the electric work machines by using wireless communication, the wireless linking system of the electric work machines can be easily realized without preparation for the connection of a power cable or a signal code for transmitting a linking signal. In addition, with the wireless communication, the linked operation is possible even if one or both of the master-side and slave-side electric work machines are battery-driven electric work machines. Therefore, the limitation on the power sources of the electric work machines is lifted.

FIG. 2 is a left side view of the circular saw 10 in which a portion is shown in a cross-sectional view. The circular saw 10 is a cordless-type electric work machine using a battery pack 100 as the power source. The circular saw 10 has the housing 12 and the base 20. The base 20 is, for example, a metal plate member in a substantially rectangular shape. The bottom surface of the base 20 serves as a sliding surface with a material to be cut, and a long hole (not shown in the drawing) which the saw blade 25 penetrates through is formed in the vicinity of the left-right center in the longitudinal direction. The housing 12 on the body side of the circular saw 10 is connected to the base 20 at two places, i.e., the front and the rear, and the base 20 is left-right tiltable with respect to the housing 12. The housing 12 accommodates the motor and the power transmission mechanism not shown in the drawing, and the handle unit 13 is formed at the upper portion of the housing, and a battery mounting unit 14 is formed on the rear lower side of the handle unit 13. The motor not shown in the drawing is mounted to the left side of the housing 12, and the motor is accommodated in a motor cover 16, so that the rotation axis of the motor extends in the horizontal direction.

The handle unit 13 is a grip for the user to grip the circular saw 10. A trigger switch 17 is provided inside the handle unit 13, and the trigger lever 17a is provided below the trigger switch 17, so as to protrude downward from the handle unit 13. The operator rotates the motor by pulling the trigger lever 17a (moving the trigger lever 17a upward), and stops the motor by releasing the trigger lever 17a (allowing the trigger lever 17a to return downward). The protection cover 26, for example, is a movable covering member configured by a resin member, and, in the case where the cutting operation is not performed, covers the lower half (the portion protruding downward from the bottom surface of the base 20) of the saw blade 25, except for a portion on the front.

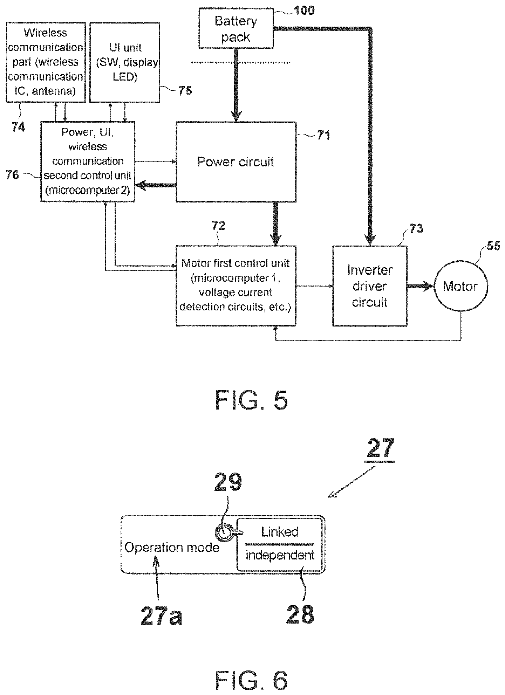

The operation panel 27 is provided on the upper surface of the housing 12 rearward of the motor. The operation panel 27 is an input means for performing mode switching between the "independent operation mode" and the "linked operation mode". Details in this regard will be described in the following with reference to FIG. 6. A control circuit substrate 30 on which the circuit for controlling the rotation control of the motor and the wireless communication of the circular saw 10 is mounted is disposed on the lower side of the operation panel 27. A wireless communication part 34, which is a characteristic configuration of the embodiment, is provided inside the handle unit 13 of the circular saw 10. The wireless communication part 34 is a unit for transmitting and receiving predetermined information with the dust collector 50 according to a wireless communication standard. The wireless communication part 34 may be provided at any arbitrary position, and may be provided at any position in the housing 12 as long as the position is a place that does not block or affect radio waves. In addition, the housing 12 may be provided with a connector that is detachable from the wireless communication unit accommodating the wireless communication part 34, and the wireless communication part 34 may be detachable with respect to the housing 12.

The battery mounting unit 14 is provided at the rear lower part of the handle 13 of the housing 12, and the battery pack 100 is detachably installed. The battery pack 100 is a power source for supplying driving power to the motor 15, and accommodates a secondary battery, such as a lithium ion battery. A plurality of terminals (tool-side positive terminal 41, etc.) for electrically connecting the battery pack 100 are provided on the lower side of the battery mounting unit 14. The battery pack 100 is installable to the housing 12 by sliding from the rear toward the front side in the horizontal direction. In the installed state, the terminal on the tool body side and the terminal on the battery pack side are electrically conductive. By pressing latches 101 provided on the left and right sides while sliding the battery pack 100 toward the rear, the battery pack 100 can be removed from the housing 12.

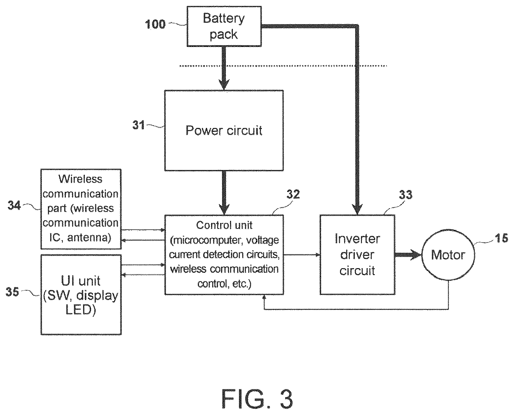

FIG. 3 is a schematic circuit block diagram of the circular saw 10. A control unit 32 is a circuit for controlling the operations of the respective units of the circular saw 10. The control unit 32 is configured as including a one-chip microcomputer, and the microcomputer detects the voltage of the battery, detects the current flowing in the motor, and controls the wireless communication, etc. The direct current (DC) supplied from the battery pack 100 is output to a power circuit 31. The power circuit 31 outputs a DC of a constant low voltage (e.g., 5V or 3.3V) from a high voltage such as 18, and the control unit 32 is operated by the low voltage power. The output of the battery pack 100 is also input to an inverter driver circuit 33. The electronic elements mounted on the inverter driver circuit 33 include six switching elements, such as field effect transistors (FETs), insulated gated bipolar transistors (IGBTs), etc., in a three-phase bridge connection. The switching elements in bridge connection are connected to stator wirings U, V, and W of the motor 15 in star connection or delta connection. The six switching elements are controlled by the microcomputer included in the control unit 32. Therefore, the inverter driver circuit 33 performs a switching operation according to the switching element driving signal output from the microcomputer of the control unit 32, and converts the DC voltage supplied from the battery pack 100 into an alternating current (AC) with voltages Vu, Vv, and Vw of three phases (U-phase, V-phase, and W-phase) and supplies the CV to the motor 15.

The wireless communication part 34 is a part firstly added to the circular saw 10 of the embodiment, and serves to perform uni-directional or bi-directional communication with the another electric work machine (e.g., the dust collector 50 of FIG. 1) with a wireless communication part. Here, predetermined information is transmitted and received to and from another electric work machine according to a conventional wireless communication standard, such as Bluetooth (registered trademark of Bluetooth SIG, Inc.) that has been widely use. The wireless communication standard that is used is not particularly limited, as long as the standard has a transmission distance as required. Any other arbitrary short-distance communication technology, such as Wi-Fi (registered trademark of Wi-Fi Alliance), may also be used. Besides, in addition to communication via radio waves, infrared communication or optical communication may also be used. The wireless communication part 34 is configured as including a specialized one-chip IC on which a communication module for performing wireless communication is mounted and an antenna unit for transmitting and receiving radio waves of a frequency band determined in the above standard. The timing of the signal transmitted by the wireless communication part 34 and the content thereof are instructed by the microcomputer included in the control unit 32, and are decoded and then transmitted by the wireless communication part 34. In addition, the radio waves received by the wireless communication part 34 are decrypted and then output to the control unit 32. The control unit 32 has a detection circuit that detects a voltage or current flowing in the motor, performs control over the wireless communication using the wireless communication part 34 with another electric work machine as well as control over the rotation of the motor 15, and performs other general control including obtaining of an input operation or output display.

A user interface (UI) unit 35 inputs information from the operator to the control unit 32 and outputs information with respect to the operator from the control unit 32, and can use an input means, such as the trigger switch 17, a push switch, etc., and any arbitrary output means such as a single LED, a multi-segment LED, an image display panel.

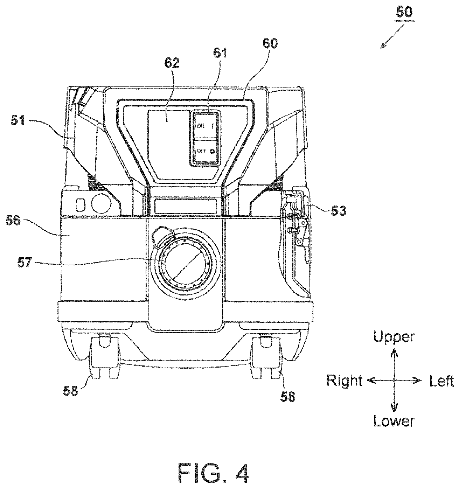

FIG. 4 is a front view of the dust collector 50. Except for that the dust collector 50 has a wireless communication part 74 (as shown in FIG. 5) as well as the modification that come along therewith, the configuration of the dust collector 50 is the same as that of a conventional dust collector. The dust collector 50 includes a tank unit 56 and a head unit 51 that are separable from each other. The head unit 51 is detachably fixed to the upper portion of the tank unit 56 by a clamp mechanism 53 as an installation mechanism. The tank unit 56 is in a cylindrical shape having an open upper portion and a bottom, and has a hose installation port 57 for connecting the dust collecting hose 4 on a side surface (front side surface). Inside the tank unit 56, a filter (not shown) in a truncated cone shape for filtering sucked dust is provided. The filter that is not shown is airtightly held by the tank unit 56 and the head unit 51. If dust accumulates due to the dust collecting operation, the tank unit 56 and the head unit 51 are separated and the dust inside the tank unit 56 is discarded. A plurality of casters 58 that are rotatable on a disposed surface are provided at the lower portion of the tank unit 56.

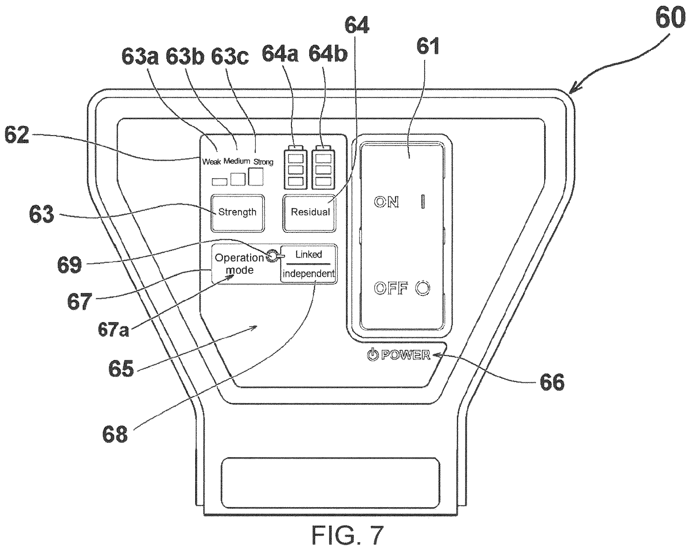

In the head unit 51, a motor 55 (to be described with reference to FIG. 5), the battery pack 100 (not shown in the drawing), a control unit, and the wireless communication part 74 (to be described with reference to FIG. 5) are provided on the inner side of the head housing. The motor 55 is disposed inside the head unit 51 so that the output shaft thereof (not shown) extends vertically in the vertical direction, and rotates the dust collecting fan that is not shown. The operation display unit 60 with which the user performs an input operation and which displays the information from the control unit is provided on the side surface of the front side of the head unit 51. The operation display unit 60 includes a power switch 61 and an operation panel 62. Details thereof will be described in the following with reference to FIG. 7.

In the dust collector 50, when the motor 55 (to be described with reference to FIG. 5) rotates, the dust collecting fan that is not shown rotates. Through the rotation of the dust collecting fan, a negative pressure occurs in the tank unit 56, and a sucking force is generated in the hose installation port 57. Then, via the dust collecting hose 4 (as shown in FIG. 1), the air in the inner portion of the duct adapter 18 (as shown in FIG. 1) is sucked together with dust, and is sucked into the tank unit 56 via the hose installation port 57. Then, in the tank 56, the dust and the air are separated by the filter not shown in the drawing, and only the filtered air is discharged out of the tank unit 56.

FIG. 5 is a schematic circuit block diagram of the dust collector 50 of FIG. 1. As the power source, the same battery pack 100 used by the circular saw 10 is used. Two battery packs 100 can be installed, and by connecting the battery packs 100 in parallel, the working time by using batteries can be increased. In the dust collector 50, the motor 55, which is a brushless motor, is driven by using an inverter driver circuit 73. In the embodiment, the wireless communication part 74 is newly provided with respect to the conventional dust collector, and, in accordance with the new configuration, a UI unit 75 is also modified. The wireless communication part 74 performs uni-directional or bi-directional communication by using a wireless communication standard same as that of the another electric work machine with a wireless communication part, such as the circular saw 10 (as shown in FIG. 1). Here, predetermined information is transmitted and received to and from the wireless communication part 34 (as shown in FIG. 3) of the circular saw 10. The wireless communication part 74 can be configured as including a specialized one-chip IC on which a communication module for performing wireless communication is mounted and an antenna unit. The timing of the wireless signal transmitted by the wireless communication part 74 and the content thereof are instructed by the microcomputer of a second control unit 76. In addition, the wireless signals received by the wireless communication part 74 are decrypted and then output to the second control unit 76. The second control unit 74 outputs a control signal to a power circuit 71 to control the operation thereof according to a received signal, and transmits a wireless signal to a first control unit 72. With the first control unit 72 to which the wireless signal is transmitted operating the inverter driver circuit 73 according to the wireless signal in the linked operation mode, the driving and stopping of the motor 55 are performed.

The first control unit 72 is a control unit for controlling the operations of the respective units of the dust collector 50. The first control unit 72 is mainly configured by a one-chip microcomputer, has a detection circuit that detects a voltage or current flowing in the motor 55, performs rotation control over the motor 55, and performs other general control including obtaining of an input operation or output display. The second control unit 76 is a sub-control unit that performs control over ON/OFF of the power circuit 71 and control of wireless communication, and assists the first control unit 72 serving as a main control unit. The second control unit 76 is also mainly configured by a one-chip microcomputer (second microcomputer). The first control unit 72 and the second control unit 76 exchange information with each other via a signal line. For the convenience of implementation, the first control unit 72 and the second control unit 76 are controlled by separate microcomputers in the embodiment. However, it may also be configured that the first control unit 72 and the second control unit 76 are integrated to exert control by one microcomputer.

The DC power supplied from the battery pack 100 is connected to the power circuit 71 that outputs DC of a constant low voltage, and the first control unit 72 and the second control unit 76 are operated by the power from the power circuit 71. The output of the battery pack 100 is also input to the inverter driver circuit 73. The electronic elements mounted on the inverter driver circuit 33 include six switching elements, such as field effect transistors (FETs), insulated gated bipolar transistors (IGBTs), etc., in a three-phase bridge connection. The switching elements in bridge connection are connected to stator wirings U, V, and W of the motor 55 in star connection or delta connection. Accordingly, the six switching elements perform a switching operation according to a switching element driving signal input from a driver circuit controlled by the microcomputer, converts the DC voltage supplied from the battery pack 100 into the voltages Vu, Vv, and Vw of three phases (U-phase, V-phase, and W-phase), and supplies the voltages Vu, Vv, and Vw to the motor 55. The type of the motor 55 is not limited to the brushless DC motor driven by using the inverter driver circuit 73. A brush DC motor or other types of motors may also be used.

A user interface (UI) unit 75 inputs information to the first control unit 72 and outputs information from the first control unit 72, and can use an input means, such as a trigger switch, a push switch, etc., and any arbitrary output means such as a single LED, a multi-segment LEDs, an 8-segment LED for digital display.

Then, the operation panel 27 of the circular saw 10 is described with reference to FIG. 6. Here, together with a switch name 27a indicating the "operation mode", a switch 28 as a press button, and an LED 29 that displays in response to the condition of the switch 28 are provided. The switch 28 is a push-type soft touch switch, and "linked /independent" is printed on the surface. When the switch 28 is not operated, the LED 29 is in the "independent operation mode" in which the LED 29 is turned off. When the switch 28 is pressed, the mode is switched to the "linked operation mode". When the independent operation mode is switched to the linked operation mode, the LED 29 is in a blinking state, and the state is changed to a state (search state) of attempting to establish a wireless connection with another electric work machine to be linked. Here, when the connection with the another electric work machine (e.g., the dust collector 50) is established, the LED 29 is turned on, indicating that the pairing is completed (linked state).

When the connection with the another electric working machine (e.g., the dust collector 50) is to be cancelled, the switch 28 is pressed to switch to the independent operation mode from the linked operation mode in which the LED 29 is turned on or blinking. The LED 29 is turned off when the mode is switched to the independent operation mode. In the electric work machine of the embodiment, the setting for the independent/linked operation mode is not cleared when the power is cut off, and the mode setting at the time when the power is cut off may be maintained when the electric work machine is started again. Regarding the main switch of the circular saw 10, a specialized switch is not provided, but the main switch is turned on by an initial operation on the trigger lever 17a, and is automatically turned off after a predetermined time has passed after the operation ends. At the time when the trigger lever 17a is pulled again to turn on the power of the circular saw 10 from the OFF state, the setting for the independent/linked operation mode at the time when the power is OFF is maintained. Therefore, if the power of the circular saw 10 is turned off in the state of the linked operation mode in which the LED 29 is turned on, when the circular saw 10 is started again, the operation mode automatically becomes the linked operation mode without any operation to the switch 28, and an attempt is made to establish a wireless connection with the another electric work machine that is linked. At the time of attempting to establish the wireless connection, the LED 29 is changed to the blinking state. Once the pairing with the another electric work machine is established, the LED 29 is turned on.

FIG. 7 is an enlarged view of the operation display unit 60 of the dust collector 50. The operation display unit 60 is provided with the power switch 61 and the operation panel 62. The power switch 61 is the main switch of the dust collector 50. By turning on the power switch 61, the first control unit 72 and the second control unit 76 of the dust collector 50 are started to start the motor 55. The operation panel 62 is provided with the driving mode of the dust collector 50, the residual capacity display of the installed battery, and the switching switch of the operation mode. In addition, below the power switch 61, which is a portion of the operation panel 62, the description (a power switch label 66) for representing the power switch 61 is shown. While omitted in FIG. 7, it is possible to show the model number or the trademark of the product, etc., at a label part 65.

The driving mode of the dust collector 50 is operated at a strength switch 63 for changing the "strength" of the sucking force by switching the rotation speed of the motor. On the upper side of the strength switch 63, three LEDs, i.e., LEDs 63a to 63c, with different sizes are provided. With the displayed numbers of the LEDs 63a to 63c from the left side, the sucking force being one of "weak" (the rotation speed of the motor is low), "medium" (the rotation speed of the motor is medium), and "strong" (the rotation speed of the motor is high) is displayed.

A residual capacity check switch 64 is a button-type switch for checking the residual capacity of the installed battery. By pressing the residual capacity check switch 64, LEDs 64a and 64b each having three segments are turned on only within a predetermined time. Two battery packs 100 can be installed to the dust collector 50. The LED 64a displays the voltage corresponding to the first battery pack 100, and the LED 64b displays the voltage corresponding to the second battery pack 100. Each voltage corresponds to the number of LEDs that is turned on. In the state where there is no residual capacity, none of the LEDs is not turned on. In the case where the residual capacity is low, only one of the LEDs is turned on. In the case where the residual capacity is medium, only two of the LEDs are turned on. In the fully charged state, all of the three LEDs are turned on.

The operation panel 67 has the same function as the operation panel 27 shown in FIG. 6. Here, together with a switch name 67a indicating the "operation mode", a switch 68 as a press button, and an LED 69 that displays in response to the condition of the switch 68 are provided. The switch 68 is a push-type soft touch switch, and "linked /independent" is printed on the surface. When the switch 68 is not operated, the LED 69 is in the "independent operation mode" in which the LED 69 is turned off. When the switch 68 is pressed, the mode is switched to the "linked operation mode". When the independent operation mode is switched to the linked operation mode, the LED 69 is changed to the blinking state to automatically attempt to establish a wireless connection with another electric work machine to be linked. Here, when the pairing with the another electric work machine (e.g., the circular saw 10) is established, the LED 69 is turned on.

When the connection with the another electric working machine (e.g., the circular saw 10) is to be cancelled, by pressing the switch 68, the state of the linked operation mode in which the LED 69 is blinking or turned on is changed to the independent operation mode, and the LED 69 is turned off. In the electric work machine of the embodiment, even if the power is cut off, the linked/independent operation mode is not cleared. The mode selected is stored at the time when the power switch 61 is turned off, and at the time when the power switch 61 is turned on again, the stored mode is set. For example, if the main switch of the dust collector 50 is turned off in the state of the linked operation mode in which the LED 69 is turned on, when the dust collector 50 is started again, the linked operation mode is set automatically without any operation to the switch 68, and the state is changed to the state (search state) of attempting to establish (pair) a wireless connection with another electric work machine to be linked. At this time, the LED 69 is changed to the blinking state. Once the wireless connection with the another electric work machine is established, the LED 69 is turned on (linked state). With the above configuration, the master-side electric work machine as well as the slave-side electric work machine can easily perform the linked operation mode.

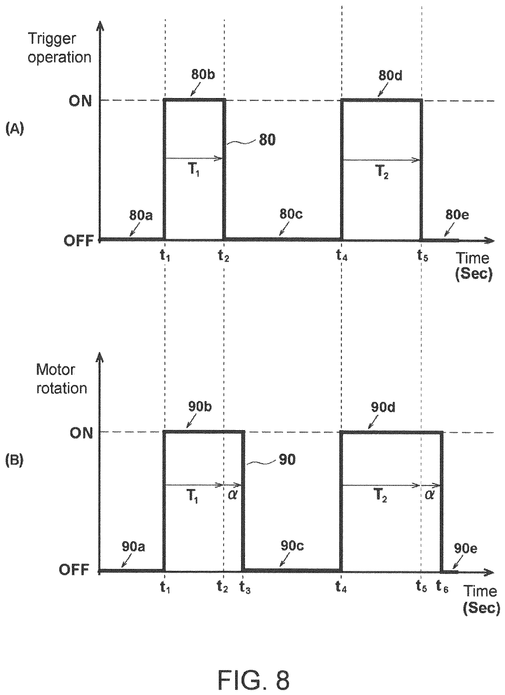

FIG. 8 is a diagram illustrating the timings of the operations of the respective electric work machines (the circular saw 10, the dust collector 50) in the wireless linking system of the embodiment, in which (A) illustrates a trigger operation state 80 of the master-side electric work machine (circular saw 10), and (B) illustrates a working condition 90 of the motor 55 of the slave-side electric work machine (dust collector 50). The horizontal axes of (A) and (B) are time (unit: second(s)), and the respective horizontal axes are shown as synchronized. In the wireless linking system of the invention, the slave-side electric work machine (dust collector 50) is operated in response to the trigger operation of the master-side electric work machine (circular saw 10). At a time t₁, when the trigger lever 17a of the circular saw 10 is pulled, the trigger switch 17 is changed from the OFF state of an arrow 80a to the ON state of an arrow 80b, and the motor 15 of the circular saw 10 rotates. The rotation control over the motor 15 is performed by the control unit 32 (as shown in FIG. 3). The cutting operation by the operator only lasts for a time Ti. At a time t₂, when the operator releases the trigger lever 17a, as indicated by an arrow 80c, the motor 15 is stopped as the trigger is OFF. Similarly, at a time t₄, when the trigger lever 17a is pulled, and the trigger switch 17 is changed to the ON state, as indicated by an arrow 80d. At a time t₅, the trigger lever 17a is released, and the motor 15 is stopped as the trigger is OFF, as indicated by an arrow 80e.

When the circular saw 10 is operated as shown (A) of FIG. 8, the signal (linking signal) indicating the trigger operation of the circular saw 10 is transmitted to the dust collector 50 where pairing is completed. The second control unit 76 (as shown in FIG. 5) of the dust collector 50 that receives the linking signal, at the time t₁ (strictly speaking, there is a slight time lag, but the time lag is so little that it can be neglected), the switch of the motor 55 is switched from the OFF state (stopped state) as indicated by an arrow 90a to the ON state (rotation state) as indicated by an arrow 90b. Here, at the time t₂, when the operator releases the trigger lever 17a (as shown in FIG. 2) of the circular saw 10, the linking state indicating this is transmitted wirelessly to the dust collector 50. The second control unit 76 of the dust collector 50 transmits the linking signal to the first control unit 72 to stop the motor 55. At this time, while the first control unit 72 can directly stop the motor 55 at the time t₂, the first control unit 72 here provides a delay time α and stops the motor 55 at a time t₃ as indicated by an arrow 90c. This is because, with the addition of the dust collecting operation during the delay time α after the operation of the circular saw 10 ends, the dust from the circular saw 25 after cutting or the cut object can be sufficiently collected. The delay time α may be set as an arbitrary time equal to or greater than 0, and may be set in advance as one of the parameters in the second control unit of the dust collector 50. Similarly, when the linking signal indicating the trigger operation of the circular saw 10 is transmitted to the dust collector 50 at the time t₄, the motor 55 of the dust collector 50 rotates, as indicated by an arrow 90d. When the linking signal indicating that the trigger operation of the circular saw 10 ends is transmitted to the dust collector 50, the first control unit 72 of the dust collector 50 stops the motor 55 at a time t₆ after the delay time α has passed from the time t₅ as indicated by an arrow 90e.

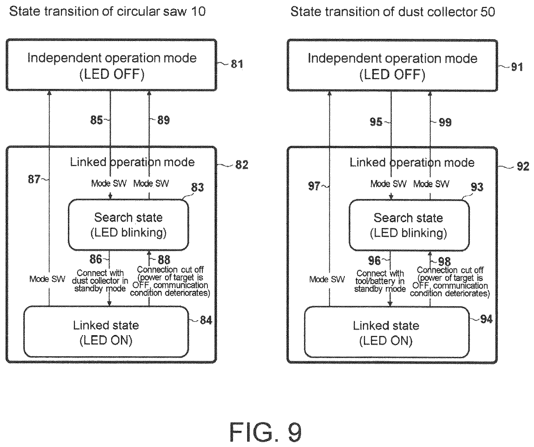

FIG. 9 is a diagram illustrating the state transitions of operation modes in the paired electric work machines (the circular saw 10, the dust collector 50). The left side of FIG. 9 shows the state transition of the circular saw 10, and the right side shows the state transition of the dust collector 50. In the electric work machines, the same mode setting is prepared, and independent operation modes 81 and 91 and linked operation modes 82 and 92 are provided. In the linked operation modes 82 and 92, there are two states, i.e., search states 83 and 93 searching for a pairing target and linked states 84 and 92 where pairing is completed. In the case of where the circular saw 10 on the master side and the dust collector 50 on the slave side are both in the linked states 84 and 94, the circular saw 10 and the dust collector 50 can be linked and perform linked operations as shown in FIG. 8. Regarding the search states 83 and 93 in the middle of the pairing process of the linked operation modes 82 and 92, since the search states 83 and 93 are states where the linking preparation through wireless connection is not completed yet, when the circular saw 10 is operated in the search states 83 and 93, the operation is performed in a non-linked state like the independent operation mode 81, and the dust collector 50 does not work even if the circular saw 10 is operated. In the search states 83 and 93, the LED 29 (as shown in FIG. 6) and the LED 69 (as shown in FIG. 7) are in the blinking state. Therefore, the operator can easily identify the state as "a state where the linked operation mode has been selected, but the pairing has not been completed".

The switching from the independent operation modes 81 and 91 to the linked operation modes 82 and 92 as indicated by arrows 85 and 95 can be performed by pressing the switch 28 (as shown in FIG. 6) and the switch 68 (as shown in FIG. 7). Then, when the circular saw 10 and the dust collector 50 are both changed to the search states 83 and 93, if the target-side electric work machines (dust collector 50 and circular saw 10) in standby in the search states 83 and 93, which may also be considered as standby modes, are connected, the circular saw 10 and the dust collector 50 are changed to the linked states 84 and 94, as indicated by arrows 86 and 96. With the LED 29 (as shown in FIG. 6) and the LED 69 (as shown in FIG. 7) being turned on, the operator can tell that the circular saw 10 and the dust collector 50 are changed to the linked states 84 and 94. In the case where the wireless connection is cut off for some reason during a linked operation or when the operation is stopped in the linked states 84 and 94, the circular saw 10 and the dust collector 50 return to the search states 83 and 93, as indicated by arrows 88 and 98. In the search states 83 and 93, a target-side electric work machine for pairing is searched for again. If the pairing is completed, the states are changed to the linked states 84 and 94, as indicated by arrows 86 and 96.

In the search states 83 and 93, in the case where the blinking states of the LED 29 and the LED 69 continue for a long time, and the operator determines that the electric work machines cannot be linked, the operator can press the switch 28 (as shown in FIG. 6) and the switch 68 (as shown in FIG. 7) to switch to the independent operation mode, as indicated by arrows 89 and 99. When the circular saw 10 and the dust collector 50 are changed to the independent operation mode, the LED 29 and the LED 69 are turned off, and the operator can easily determine that the mode is switched.

In the linked operation modes 84 and 94, by pressing the switch 28 (as shown in FIG. 6) and the switch 68 (as shown in FIG. 7) as indicated by arrows 87 and 97, the operator can end the linked operation. When the circular saw 10 and the dust collector 50 are changed to the independent operation mode, the LED 29 and the LED 69 are turned off, and the operator can easily determine that the mode is switched.

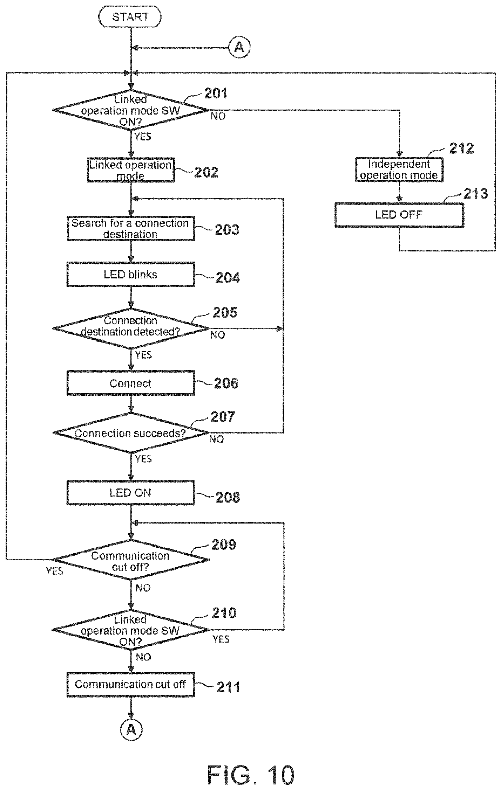

FIG. 10 is a flowchart illustrating the procedures in the pairing process performed by the controller of the circular saw 10. A series of procedures shown in FIG. 10 can be executed as software by a program stored in advance in the microcomputer of the control unit 32. The pairing process is a process that, at the time of performing the linked operation by a plurality of electric work machines, identifies the master-side electric work machine (the circular saw 10) and the slave-side electric work machine (the dust collector 50) with each other, and links the driving of the dust collector 50 on the slave side from the circular saw 10 on the mater side in response to the result of the identification. The control of FIG. 10 is performed after the battery pack 100 is installed to the circular saw 10 and the microcomputer of the control unit 32 is started after the trigger lever 17a is firstly pulled. In addition, the control is processed in parallel with other processes performed by the microcomputer of the control unit 32, and is repetitively performed until the microcomputer is shutdown.

Initially, the microcomputer of the control unit 32 determines whether the switch 28 (as shown in FIG. 6) of the linked operation mode is in a state of being pressed to be turned on ("linked operation mode") (Step 201). In the case where the switch is in a state of not being pressed, the linked operation with another electric work machine (the dust collector 50, etc.) is not performed. Therefore, the electric work machine is operated in the "independent operation mode" (Step 212). At this time, the LED 29 (FIG. 6) is turned off, and the flow returns to Step 201 again.

In Step 201, in the case where the switch 28 (FIG. 6) of the linked operation mode is ON (linked operation mode), the operation of the linked operation mode is started (Step 202), and, firstly, a search which looks for an electric work machine as the pairing target to establish a wireless connection is performed (Step 203). "Pairing" in the embodiment refers to a state in which the linked operation between the circular saw 10 and the dust collector 50 can be performed. By transmitting a request signal from one of the electric work machines (here the circular saw 10) that is linked to the other electric work machine (here the dust collector 50), the search is performed for whether there is a connection destination (the other electric work machine) responding to the request signal (Step 203). In the search state, the LED 29 (as shown in FIG. 6) is in the blinking state to notify the operator that the connection destination is being searched for (Step 204). In the search, if the connection destination is detected, the connection with a connectible electric work machine which firstly responds to the request is performed (Steps 205, 206). In the case where Bluetooth (registered trademark) is used, these pairing procedures can be performed according to the standard of Bluetooth. In the embodiment, the inherent identification information of a specific device as a connection target is held in the electric work machine on the side performing the request. The control of making a connection, if there is the inherent identification information as the connection target, from therein is not performed, but the automatic connection with the electric work machine which firstly responds to the request is performed. However, since the request signal includes the type identification information (e.g., the model number of the electric work machine) for identifying the type of the electric work machine, the connection cannot be made with any arbitrary type of electric work machine. For example, the electric work machine linkable with the circular saw 10 only includes the dust collector 50 and other dust collectors. Whether the circular saw 10 is connectible with a model is defined and stored in advance as a parameter in the control unit 32 on the side of the circular saw 10. Therefore, the electric work machine does not connect with a model not linkable therewith, such as a speaker using Bluetooth.

Pairing is performed in Step 206, and if the connection succeeds (Step 207), the linked operation is started. In the linked state, the control unit turns on the LED 29 (as shown in FIG. 6) to notify the operator that the connection with the electric work machine linked through pairing is established (Step 208). In addition, the control unit temporarily stores the identification information of the another electric work machine that is linked in the memory of the microcomputer. In the linked state, the operator pulls the lever trigger 17a to rotate the motor 15, and the circular saw 10 operates, and, as shown in FIG. 8, the dust collector 50 is also linked and driven. The rotation control procedure of the motor 15 or the transmission of the linking signal with respect to the dust collector 50 from the circular saw 10 used with the rotation control procedure are executed in parallel by a control program different from the program executing the flowchart shown in FIG. 10. In addition, in the case where the trigger lever 17a is pulled between Step 202 to Step 208, the circular saw 10 is operated as an individual unit (operating in the same manner as in the independent operation mode).

The linking signal includes driving state identification information (e.g., the rotation speed of the motor), which switches the control when the driving of the dust collector 50 starts and is the information indicating the driving state of the motor of the electric work machine. Specifically, the driving state identification information is the information for changing the start time from the beginning of the driving of the motor on the side of the circular saw 10 until the dust collector 50 being driven at the operation speed in response to the driving state of the motor on the side of the circular saw 10. In response to the driving state identification information, the first control unit 72 of the dust collector 50 switches the start time, which is from the time when the external electric work machine driving starts, or from the time when the power supply to the motor of the dust collector 50 starts, until the power supplied to the motor of the dust collector 50 reaches the actual working voltage. In addition, the first control unit 72 of the dust collector 50 changes the length of the start time or the delay time α at the time of stopping in response to the type of the circular saw 10 included in the driving state identification information.

In addition, the driving state identification information includes mode setting information indicating whether the rotation speed of the motor is changed in response to the load of the operation which the electric work machine performs. The mode setting information includes information indicating the setting of the electric work machine determined in response to the driving state of the motor, such as an auto-mode which maintains the rotation speed of the motor so that the rotation speed is less than a predetermined rotation speed in the case where the load to the tip tool (the saw blade 25) of the electric work machine (the circular saw 10) is less than a predetermined threshold, and increases the rotation speed of the motor to become equal to or higher than the predetermined rotation speed in the case where the load to the tip tool becomes equal to or greater than the predetermined threshold, or a normal mode which increases the rotation speed of the motor at a constant rate until a predetermined rotation speed regardless of the load to the tip tool.

If the linked operation mode is established in Step 207, the linked operation mode lasts until the communication is cut off for some reason or the operator presses the switch 28 (as shown in FIG. 6) of the linked operation mode to switch to the "independent operation mode" (Step 209, Step 210). In Step 209, whether the communication is cut off is determined. If the communication is cut off, the identification information is deleted and the flow returns to Step 201. By executing Step 202 and steps afterwards, another search for a linkable electric work machine is performed. As an example, where the communication is cut off, there is a case where the communication is cut off by the target-side electric work machine by pressing the linked operation mode switch (e.g., the switch 68 of FIG. 7) in the target-side electric work machine to switch to the "independent operation mode". If the communication is not cut off in Step 209, the microcomputer of the control unit 32 determines that the state of the switch 28 on the own machine side is still in the "linked operation mode", and if the mode is still the linked operation mode, the flow returns to Step 209 (Step 210). In Step 210, if the "linked operation mode" is canceled and the mode is changed to the "independent operation mode", the communication with the target-side electric work machine is cut off (Step 211), and the flow returns to Step 201.

In Step 204, the case where the target-side electric work machine to be linked cannot be detected is, for example, the case where the target-side electric work machine, such as a dust collector, is not within the connectible range, or the case where, even within the connectible range, the situation is not the situation where the main power is ON and the mode is set to "linked operation mode". In this case, the flow returns to Step 202, and the search state which searches for the target-side electric tool continues. At this time, a timeout is not set for the search time of the target-side electric work machine, and the search for the target-side electric work machine continues while the LED is blinking. Therefore, in the search state, within the wirelessly connectible range, if a connectible model is switched to the linked operation mode, pairing registration can be carried out immediately.

By using the method of the embodiment, pairing can be easily performed simply by switching two electric work machines performing the linked operation to the linked operation mode within the wireless communication range. In addition, since a timeout time is not set in the search state at the time when pairing is performed, there is no influence even if the timings at which the two electric work machines switch to the linked operation mode are staggered. Even in the case where there are multiple connectible electric work machines within the wireless communication range, such as the case where there are two dust collectors, a model that has been paired in the linked operation mode cannot be connected from the circular saw side, so such case does not particularly pose a problem. In addition, in the case of having been connected with another unintended model (e.g., a third dust collector), by simply turning off the power of the another unintended model (the third dust collector) or pressing the switch 68 of the linked operation mode of the another unintended model (the third dust collector) to switch to the independent operation mode, the circular saw 10 can connect with the desired dust collector (the first dust collector). Therefore, with a simple procedure, the pairing can be recovered, and for the operator, the wireless linking system can be used rather easily.

### Embodiment 2

In the embodiment of FIGs. 1 to 10, the linking is between the electric work machines respectively having the wireless communication parts. However, the linking cannot be carried out with an electric work machine without a wireless communication part. For example, there is a case where a new dust collector 50 with a wireless communication part is to be linked with a conventional cordless circular saw without a wireless communication part. Therefore, the embodiment is configured so that a wireless communication part 134 is provided at the battery pack, and the embodiment is configured so that linking with the slave-side electric work machine (the dust collector 50) can be carried out via the wireless communication part 134.

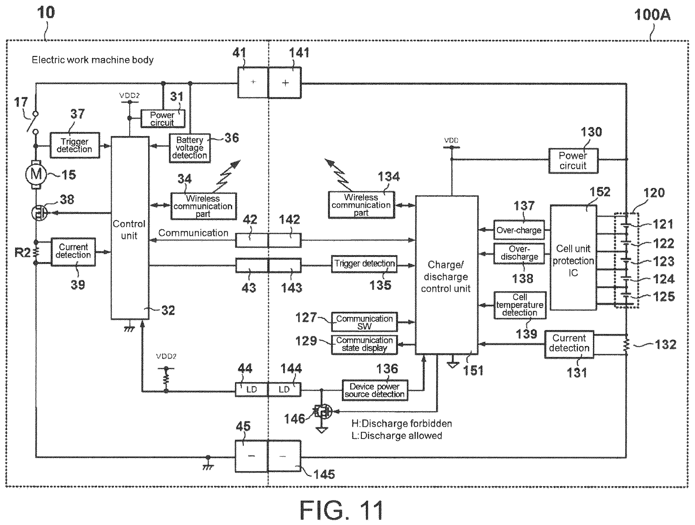

FIG. 11 is a connection circuit configuration diagram of an electric work machine body (circular saw 10) and a battery pack 100A. As shown in FIG. 11, the circular saw 10 has the tool-side positive terminal 41, the trigger switch 17 for supplying power supplied from the battery pack 100A to the motor 15, a tool-side trigger detection terminal 43 for detecting the power being supplied from the battery pack 100A, the motor 15 for driving the circular saw 10, a tool-side negative terminal 45, and a tool-side LD terminal 44 that outputs a voltage value of the electric work machine. The circular saw 10 further includes a battery voltage detection circuit 36, the power circuit 31, a trigger detection circuit 37, a current detection circuit 39, the control unit 32, a communication connection terminal 42, and the wireless communication part 34.

The battery voltage detection circuit 36 is a detection member for measuring the voltage supplied from the battery pack 100A, and the output thereof is connected to an A/D converter of the microcomputer of the control unit 32. A digital value corresponding to the detected battery voltage is input from the A/D converter, and the control unit 32 compares the input digital value with a predetermined value set in advance, and sets, in the case where the battery residual capacity is less than the predetermined value, i.e., at the time of an over-discharge state, a switching element 38 to a blocked state. That is, by setting the gate signal of the FET to LOW, the control unit 32 temporarily stops the rotation of the motor 15 to protect the battery pack 100A from over-discharge.

The power circuit 31 is a power circuit for generating the operation voltage of the control unit 32. In the state where the power of the control unit 32 is turned off, when the trigger lever 17a is firstly pulled to turn on the trigger switch 17, the power circuit 31 supplies the voltage to the control unit 32 to start the microcomputer of the control unit 32, and, by continuously outputting a power maintaining signal from the control unit 32 to the power circuit 31, even if the trigger switch 17 is returned, the power supply to the control unit 32 is maintained for a predetermined time, and the microcomputer of the control unit 32 continues operating.

The trigger detection circuit 37 is a circuit for detecting that the trigger switch 17 is turned off and outputting a signal indicating that the trigger switch 17 is turned off to the control unit 32. The current detection circuit 39 is a circuit that detects a current flowing in the circuit (current flowing in the motor 15). The current detection circuit 39 detects the voltages on two ends of a shunt resistance R2, and a digital value corresponding to the current value detected by the current detection circuit 32 is input to the A/D converter of the control unit 32.

The control unit 32 is mainly composed of a microcomputer, and controls the respective units of the circular saw 10. The communication connection terminal 42 is a connection terminal for the control unit 32 to communicate with a charge/discharge control unit 151 of the battery pack 100A to transmit and receive various control information. The wireless communication part 34 is a circuit for communicating with an external device (e.g., the dust collector 50) according to a wireless communication standard, such as Wi-Fi (registered trademark) communication or Bluetooth (registered trademark) communication. However, in the case where the battery pack 100A with the wireless communication part 34 is used, the wireless linking system of the invention can be realized even in the configuration where the wireless communication part 34 is not provided on the electric work machine body side.

The battery pack 100A includes a cell unit 120 having a rated output voltage of 18V and including five cell units 121 to 125. The charge/discharge control unit 151 is a circuit which includes a central processing unit (CPU) that outputs a driving signal based on a program and data, a read only memory (ROM) that stores the program and the data, a random access memory (RAM) that temporarily stores the data, and a timer, etc., and monitors charging and discharging of the battery pack 100A. The battery pack 100A has a battery side trigger detection terminal 143 for connection to the tool-side trigger detection terminal 43, and a trigger detection circuit 135 for detecting the power supply from the electric work machine received by the battery side trigger detection terminal 143.

In addition, the battery pack 100 has a battery side LD terminal 144 that inputs the voltage value of the electric work machine and a device power detection circuit 136 for detecting the voltage value of the electric work machine by the battery side LD terminal 144. In the cell unit 120, a cell unit protection IC 152 that protects the cell unit 120 is provided. An over-charge detection circuit 137 and an over-discharge detection circuit 138 using the signal of the cell unit protection IC 152 are connected, and the signals thereof are output to the charge/discharge control unit 151.

The cell unit protection circuit 152 monitor the voltages of the respective battery cells and serves to prevent over-charge or over-discharge of any of the battery cells. Since the voltage of the battery cell increases when the battery cell is charged, when the charge continues, and the voltage of the battery cell reaches a threshold voltage (charge limit voltage) of full charge, an over-charge signal is output from the over-charge detection circuit 137. Similarly, in the case where the voltage of at least one of the battery cells drops to a threshold voltage (discharge limit voltage) that draws the concerns of over-discharge, an over-discharge signal is output from the discharge detection circuit 138. As an example, the over-charge detection circuit 137 and the over-discharge detection circuit 137 output a high signal in the case where the battery pack 100A is at a normal usage voltage that is neither over-discharged nor fully charged, and output a low signal in the case of notifying over-discharge or full charge. The cell temperature detection circuit 139 includes a temperature detection element, such as a thermistor that is not shown herein, disposed in a vicinity of each of the battery cells that form the cell unit 120 and the cell unit 120, detects the temperature of each of the battery cells 121 to 125, and transmits the temperature to the charge/discharge control unit 151.

The power circuit 130 generates a reference voltage VDD for the operation of the charge/discharge control unit 151 based on the voltage of the cell unit 120, and supplies the reference voltage VDD to the charge/discharge control unit 151. A current detection circuit 131 detects the current flowing through the cell unit 120 based on the voltages on two ends of a resistor 132 in serial connection with the cell unit 120, and outputs the result to the charge/discharge control unit 151.

The wireless communication part 134 is a part firstly added to the battery pack 100A of the embodiment, and serves to perform uni-directional or bi-directional communication with the another electric work machine (e.g., the dust collector 50 of FIG. 1) with a wireless communication part. Here, like the circular saw 10 and the dust collector 50, a conventional wireless communication standard, such as Bluetooth (registered trademark), is used to transmit and receive predetermined information.

The operation of the battery pack 100A using the wireless communication part 134 shown in FIG. 11 is described. The control unit 32 of the electric work machine and the charge/discharge control unit 151 on the side of the battery pack 100A are able to communicate bi-directionally via the communication connection terminals 42 and 142. In addition, if a trigger operation is detected by the trigger detection circuit 37 on the electric work machine body side, the control unit 32 of the electric work machine body transmits a trigger operation signal to the charge/discharge control unit 151 on the side of the battery pack 100A via the trigger detection terminals 43 and 143. When receiving the trigger detection signal, the charge/discharge control unit 151 transmits the trigger detection signal to the slave-side electric work machine (e.g., the dust collector 50) via the wireless communication part 134. Before performing the wireless linking operation, the side of the battery pack 100A needs to be switched to the linked operation mode. Therefore, a communication switch 127 for switching to the linked operation mode that performs the linked operation wirelessly, that is, a switch like the switch shown in FIG. 6, and a communication state display means 129, such as an LED, are newly provided. In the case where the battery pack 100A does not perform the linked operation with another electric work machine, or in the case where the wireless communication part 34 is provided on the electric work machine body side, as the independent operation mode, it suffices as long as the battery pack 100A does not operate the wireless communication part 134, like the conventional battery pack 100.

By using the second embodiment, even in the electric work machine without the wireless communication part, the wireless linking system can be easily realized if the battery pack 100A with the wireless communication function is installed. By similarly using the battery pack 100A, the wireless linking system can also be easily realized in the slave-side electric work machine (the conventional dust collector without the wireless communication part).

Although the invention has been described above based on the embodiments, the invention is not limited to the embodiments, and various modifications can be made within the scope of the appended claims. For example, while the circular saw 10 is described as the master-side electric work machine used in the wireless linking system 1, various other tools, such as a jigsaw, a grinder, a hammer drill, can also be used. In addition, the master-side electric work machine and the slave-side electric work machine are not limited to cordless electric work machines, and electric work machines using a commercial power source can also be used.

### [Description of Symbols]

1: Wireless linking system; 4: Dust collecting hose; 10: Circular saw; 12: Housing; 13: Handle unit; 14: Battery mounting unit; 15: Motor; 16: Motor cover; 17: Trigger switch; 17a: Trigger lever; 18: Duct adapter; 19: Connection tube; 20: Base; 22: Wireless communication; 25: Saw blade; 26: Protection cover; 27: Operation panel; 27a: Switch name; 28: Switch; 29: LED; 30: Control circuit substrate; 31: Power circuit; 32: Control unit; 33: Inverter driver circuit; 34: Wireless communication unit; 35: UI unit; 36: Batter voltage detection circuit; 37: Trigger detection circuit; 38: Switching element; 39: Current detection circuit; 41: Tool-side positive terminal; 42: Communication connection terminal; 43: Tool-side trigger detection circuit; 44: Tool-side LD terminal; 45: Tool-side negative terminal; 50: Dust collector; 51: Head unit; 52: Wireless communication; 53: Clamp mechanism; 55: Motor; 56: Tank unit; 57: Hose installation port; 58: Caster; 60: Operation display unit; 61: Power switch; 62: Operation panel; 63: Strength switch; 63a to 63c: LED; 64: Residual capacity check switch; 64a, 64b: LED; 65: Label unit; 66: power switch label; 67: Operation panel; 67a: Switch name; 68: Switch; 69: LED; 71: Power circuit; 72: First control unit; 73: Inverter driver circuit; 74: Wireless communication unit; 75: UI unit; 76: Second control unit; 80: Trigger operation state; 90: Motor working condition; 81, 91: Independent operation mode; 82, 92: Linked operation mode; 83, 93: Search state; 84, 94: Linked state; 100, 100A: Battery pack; 101: Latch; 120: Cell unit; 121 to 125: Cell; 127: Communication switch; 129: Communication state display means; 130: Power circuit; 131: Current detection circuit; 132: Resistor 134: Wireless communication unit; 135: Trigger detection circuit; 136: Device power detection circuit; 137: Over-charge detection circuit; 138: Over-discharge detection circuit; 139: Cell temperature detection circuit; 143: Battery-side detection terminal; 144: Battery-side LD terminal; 151: Charge/discharge control unit; 152: Cell unit protection IC; VDD, VDD2: Reference voltage.

## Claims

1. An electric work machine (10), comprising a motor (15), an operation device (25) that works by using a driving force of the motor (15), and a control unit (32) that controls rotation of the motor (15),
wherein the electric work machine (10) is provided with a communication unit (34) that performs a wireless communication with a control unit (72, 76) of another electric work machine (50),
the electric work machine (10) is provided with, as operation modes, a linked operation mode in which the electric work machine (10) is linked with the other electric work machine (50) to operate and an independent operation mode in which the electric work machine (10) is not linked with the other electric work machine (50) but operates independently, and
the electric work machine (10) is provided with a switch for switching between the linked operation mode and the independent operation mode, the electric work machine (10) being **characterized in that** the control unit (32) is configured to:
at a time when the switch is switched from the independent operation mode to the linked operation mode, transition to a search state that searches for the other electric work machine (50) that is able to communicate by using the communication unit (34),
in a case where the other electric work machine (50) that is linkable is detected in the search state, transition to a linked state in which the electric work machine (10) is linked with the other electric work machine (50) to operate, and
in a case where the other electric work machine (50) that is linkable is not detected in the search state, continue the search state and continue searching for the other electric work machine (50),
wherein, in the linked state, the linked operation mode in which the electric work machine (10) is linked with the other electric work machine (50) to operate lasts until a wireless communication is cut off or the operation mode is switched by pressing the switch from the linked operation mode to the independent operation mode.

2. The electric work machine (10) as claimed in claim 1, wherein in a state where the switch is in the linked operation mode and the control unit (32) is operated in the search state that searches for the other electric work machine (50) that is linkable, if the other electric work machine (50) that is linkable is detected, the control unit (32) transitions to the linked state.

3. The electric work machine (10) as claimed in claim 2, wherein in a case where the switch is set to the linked operation mode at a time when a power is turned on, and in a case where a communication circuit set during operation in the linked operation mode is cut off while the electric work machine (10) is linked with the other electric work machine (50), the control unit (32) transitions to the search state that searches for an external electric work machine (50) that is able to communicate and connects again with any other electric work machine (50) that is detected.

4. The electric work machine (10) as claimed in claim 2 or 3, wherein whether the electric work machine (10) carries out a linked control as a master of the other electric work machine (50) by using the communication unit (34) or carries out a linked control as a slave of the other electric work machine (50) by using the communication unit (34) is defined in advance,
the electric work machine (10) on a master side searches for only the electric work machine (50) on a slave side that is linkable and external, and
the electric work machine (10) on the slave side searches for only the electric work machine (50) on the master side that is linkable and external.

5. The electric work machine (10, 50) as claimed in claim 3, wherein the control unit (32) maintains the linked state after storing identification information of the other electric work machine (50) that is linked in the linked operation mode that is the linked state,
if the linked state is transitioned to the search state during setting of the linked operation mode, the control unit (32) cancels the identification information and starts to search for another electric work machine (50) that is linkable again.

6. The electric work machine (10) as claimed in any one of claims 2 to 5,
wherein the control unit (32) maintains the linked state after storing identification information of the other electric work machine (50) that is linked in the linked operation mode that is the linked state,
if the switch is switched from the linked operation mode to the independent operation mode in the linked state, the control unit (32) cancels the identification information and disconnects the other electric work machine (50) that is in communication.

7. The electric work machine (10) as claimed in claim 6, wherein the electric work machine (10) is provided with a battery pack (100, 100A) that is detachable and supplies a power to the motor (15), and
at a time when the battery pack (100, 100A) is removed in the linked state, an external electric work machine (50) that is in communication is disconnected, and at a time when another battery pack (100, 100A) is installed, another search for another electric work machine (50) that is linkable is started.

8. The electric work machine (10) as claimed in any one of claims 1 to 7,
wherein the electric work machine (10) is provided with a battery pack (100, 100A) that is detachable and supplies a power to the motor (15),
the communication unit (34) is provided in the battery pack, and
the control unit (32) performs wireless communication with the other electric work machine (50) via the communication unit (34) in the battery pack (100, 100A).

## Patentansprüche

1. Elektrische Arbeitsmaschine (10), umfassend einen Motor (15), eine Betätigungsvorrichtung (25), die unter Verwendung einer Antriebskraft des Motors (15) funktioniert, und eine Steuereinheit (32), die die Drehung des Motors (15) steuert,
wobei die elektrische Arbeitsmaschine (10) mit einer Kommunikationseinheit (34) versehen ist, die eine drahtlose Kommunikation mit einer Steuereinheit (72, 76) einer anderen elektrischen Arbeitsmaschine (50) durchführt,
die elektrische Arbeitsmaschine (10) als Betriebsmodi mit einem verbundenen Betriebsmodus, in dem die elektrische Arbeitsmaschine (10) mit der anderen elektrischen Arbeitsmaschine (50) verbunden ist, um in Betrieb zu sein, und einem unabhängigen Betriebsmodus, in dem die elektrische Arbeitsmaschine (10) nicht mit der anderen elektrischen Arbeitsmaschine (50) verbunden ist, sondern unabhängig arbeitet, versehen ist, und
die elektrische Arbeitsmaschine (10) mit einem Schalter zum Umschalten zwischen dem verbundenen Betriebsmodus und dem unabhängigen Betriebsmodus versehen ist,
die elektrische Arbeitsmaschine (10) **dadurch gekennzeichnet ist, dass** die Steuereinheit (32) konfiguriert ist, um:
zu einem Zeitpunkt, zu dem der Schalter von der unabhängigen Betriebsart in die verbundene Betriebsart umgeschaltet wird, in einen Suchzustand überzugehen, der nach der anderen elektrischen Arbeitsmaschine (50) sucht, die in der Lage ist, unter Verwendung der Kommunikationseinheit (34) zu kommunizieren,
in einem Fall, in dem die andere elektrische Arbeitsmaschine (50), die verbindbar ist, in dem Suchzustand erkannt wird, Übergang in einen verbundenen Zustand, in dem die elektrische Arbeitsmaschine (10) mit der anderen elektrischen Arbeitsmaschine (50) verbunden ist, um in Betrieb zu sein, und
in einem Fall, in dem die andere elektrische Arbeitsmaschine (50), die verbindbar ist, in dem Suchzustand nicht erkannt wird, den Suchzustand fortzusetzen und die Suche nach der anderen elektrischen Arbeitsmaschine (50) fortzusetzen,
wobei in dem verbundenen Zustand der verbundene Betriebsmodus, in dem die elektrische Arbeitsmaschine (10) mit der anderen elektrischen Arbeitsmaschine (50) verbunden ist, um in Betrieb zu sein, andauert, bis eine drahtlose Kommunikation unterbrochen wird oder der Betriebsmodus durch Drücken des Schalters von dem verbundenen Betriebsmodus zu dem unabhängigen Betriebsmodus umgeschaltet wird.

2. Elektrische Arbeitsmaschine (10) nach Anspruch 1, wobei in einem Zustand, in dem der Schalter in dem verbundenen Betriebsmodus ist und die Steuereinheit (32) in dem Suchzustand, der nach der anderen elektrischen Arbeitsmaschine (50) sucht, die verbindbar ist, betrieben wird, die Steuereinheit (32) in den verbundenen Zustand übergeht, wenn die andere elektrische Arbeitsmaschine (50), die verbindbar ist, erkannt wird.

3. Elektrische Arbeitsmaschine (10) nach Anspruch 2, wobei in einem Fall, in dem der Schalter auf den verbundenen Betriebsmodus zu einem Zeitpunkt eingestellt wird, wenn ein Strom eingeschaltet wird, und in einem Fall, in dem eine Kommunikationsschaltung, die während des Betriebs im verbundenen Betriebsmodus eingestellt ist, unterbrochen wird, während die elektrische Arbeitsmaschine (10) mit der anderen elektrischen Arbeitsmaschine (50) verbunden ist, die Steuereinheit (32) in den Suchzustand übergeht, der nach einer externen elektrischen Arbeitsmaschine (50) sucht, die in der Lage ist, zu kommunizieren, und sich wieder mit jeder anderen elektrischen Arbeitsmaschine (50) verbindet, die erkannt wird.

4. Elektrische Arbeitsmaschine (10) nach Anspruch 2 oder 3, wobei im Voraus festgelegt wird, ob die elektrische Arbeitsmaschine (10) unter Verwendung der Kommunikationseinheit (34) eine verbundene Steuerung als Master der anderen elektrischen Arbeitsmaschine (50) durchführt oder unter Verwendung der Kommunikationseinheit (34) eine verbundene Steuerung als Slave der anderen elektrischen Arbeitsmaschine (50) durchführt,
die elektrische Arbeitsmaschine (10) auf einer Master-Seite nur nach der elektrischen Arbeitsmaschine (50) auf einer Slave-Seite sucht, die verbindbar und extern ist, und
die elektrische Arbeitsmaschine (10) auf der Slave-Seite nur nach der elektrischen Arbeitsmaschine (50) auf der Master-Seite sucht, die verbindbar und extern ist.

5. Elektrische Arbeitsmaschine (10, 50) nach Anspruch 3, wobei die Steuereinheit (32) den verbundenen Zustand beibehält, nachdem sie Identifikationsinformationen der anderen elektrischen Arbeitsmaschine (50) gespeichert hat, die in der verbundenen Betriebsart, die der verbundene Zustand ist, verbunden ist,
wenn der verbundene Zustand während der Einstellung des verbundenen Betriebsmodus in den Suchzustand übergeht, die Steuereinheit (32) die Identifikationsinformationen löscht und mit der Suche nach einer anderen elektrischen Arbeitsmaschine (50), die wieder verbindbar ist, beginnt.

6. Elektrische Arbeitsmaschine (10) nach einem der Ansprüche 2 bis 5, wobei die Steuereinheit (32) den verbundenen Zustand beibehält, nachdem sie die Identifikationsinformationen der anderen elektrischen Arbeitsmaschine (50), die in der verbundenen Betriebsart, die der verbundene Zustand ist, verbunden ist, gespeichert hat,
die Steuereinheit (32) die Identifizierungsinformationen löscht und die andere elektrische Arbeitsmaschine (50), die in Kommunikation steht, trennt, wenn der Schalter in dem verbundenen Zustand von der verbundenen Betriebsart in die unabhängige Betriebsart umgeschaltet wird.

7. Elektrische Arbeitsmaschine (10) nach Anspruch 6, wobei die elektrische Arbeitsmaschine (10) mit einem Batteriepack (100, 100A) versehen ist, das abnehmbar ist und den Motor (15) mit Strom versorgt, und
zu einem Zeitpunkt, zu dem das Batteriepack (100, 100A) in dem verbundenen Zustand entfernt wird, eine externe elektrische Arbeitsmaschine (50), die in Kommunikation steht, getrennt wird, und zu einem Zeitpunkt, zu dem ein anderes Batteriepack (100, 100A) installiert wird, eine weitere Suche nach einer anderen elektrischen Arbeitsmaschine (50), die verbindbar ist, gestartet wird.

8. Elektrische Arbeitsmaschine (10) nach einem der Ansprüche 1 bis 7, wobei die elektrische Arbeitsmaschine (10) mit einem Batteriepack (100, 100A) versehen ist, das abnehmbar ist und den Motor (15) mit Strom versorgt,
die Kommunikationseinheit (34) in dem Batteriepack vorgesehen ist, und
die Steuereinheit (32) eine drahtlose Kommunikation mit der anderen elektrischen Arbeitsmaschine (50) über die Kommunikationseinheit (34) in dem Batteriepack (100, 100A) durchführt.

## Revendications

1. Machine de travail électrique (10), comprenant un moteur (15), un dispositif d'actionnement (25) qui travaille en utilisant une force d'entraînement du moteur (15), et une unité de commande (32) qui commande une rotation du moteur (15),
dans laquelle la machine de travail électrique (10) est dotée d'une unité de communication (34) qui effectue une communication sans fil avec une unité de commande (72, 76) d'une autre machine de travail électrique (50),
la machine de travail électrique (10) est dotée, à titre de modes de fonctionnement, d'un mode de fonctionnement lié dans lequel la machine de travail électrique (10) est liée à l'autre machine de travail électrique (50) pour fonctionner, et d'un mode de fonctionnement indépendant dans lequel la machine de travail électrique (10) n'est pas liée à l'autre machine de travail électrique (50) mais fonctionne indépendamment, et
la machine de travail électrique (10) est dotée d'un commutateur destiné à commuter entre le mode de fonctionnement liée et le mode de fonctionnement indépendant,
la machine de travail électrique (10) étant **caractérisée en ce que** l'unité de commande (32) est configurée pour :
à un moment où le commutateur est commuté depuis le mode de fonctionnement indépendant vers le mode de fonctionnement lié, passer à un état de recherche qui recherche l'autre machine de travail électrique (50) qui est capable de communiquer en utilisant l'unité de communication (34),
dans un cas où l'autre machine de travail électrique (50) qui peut être liée est détectée dans l'état de recherche, passer à un état lié dans lequel la machine de travail électrique (10) est liée à l'autre machine de travail électrique (50) pour fonctionner, et
dans un cas où l'autre machine de travail électrique (50) qui peut être liée n'est pas détectée dans l'état de recherche, poursuivre l'état de recherche et continuer de rechercher l'autre machine de travail électrique (50),
dans laquelle, dans l'état lié, le mode de fonctionnement lié dans lequel la machine de travail électrique (10) est liée à l'autre machine de travail électrique (50) pour fonctionner dure jusqu'à ce qu'une communication sans fil soit coupée ou jusqu'à ce que le mode de fonctionnement soit commuté par pression du commutateur depuis le mode de fonctionnement lié vers le mode de fonctionnement indépendant.

2. Machine de travail électrique (10) selon la revendication 1, dans laquelle,
dans un état dans lequel le commutateur est dans le mode de fonctionnement lié et dans lequel l'unité de commande (32) est actionnée dans l'état de recherche qui recherche l'autre machine de travail électrique (50) qui peut être liée, si l'autre machine de travail électrique (50) qui peut être liée est détectée, l'unité de commande (32) passe à l'état lié.

3. Machine de travail électrique (10) selon la revendication 2, dans laquelle,
dans un cas où le commutateur est réglé dans le mode de fonctionnement lié à un moment où une puissance est activée, et dans un cas où un circuit de communication réglé pendant un fonctionnement dans le mode de fonctionnement lié est coupé tandis que la machine de travail électrique (10) est liée à l'autre machine de travail électrique (50), l'unité de commande (32) passe à l'état de recherche qui recherche une machine de travail électrique (50) externe qui est capable de communiquer, et se connecte à nouveau avec une quelconque autre machine de travail électrique (50) qui est détectée.

4. Machine de travail électrique (10) selon la revendication 2 ou 3, dans laquelle
il est défini à l'avance si la machine de travail électrique (10) exécute une commande liée en tant que maître de l'autre machine de travail électrique (50) à l'aide de l'unité de communication (34), ou si elle exécute une commande liée à titre d'esclave de l'autre machine de travail électrique (50) à l'aide de l'unité de communication (34),
la machine de travail électrique (10) sur un côté maître recherche uniquement la machine de travail électrique (50) sur un côté esclave qui peut être liée et qui est externe, et
la machine de travail électrique (10) sur le côté esclave, uniquement la machine de travail électrique (50) sur le côté maître qui peut être liée et qui est externe.

5. Machine de travail électrique (10, 50) selon la revendication 3,
dans laquelle l'unité de commande (32) maintient l'état lié après avoir stocké des informations d'identification de l'autre machine de travail électrique (50) qui est liée dans le mode de fonctionnement lié qui est l'état lié,
si l'état lié passe à l'état de recherche pendant un réglage du mode de fonctionnement lié, l'unité de commande (32) annule les informations d'identification et lance une recherche d'une autre machine de travail électrique (50) qui peut être liée à nouveau.

6. Machine de travail électrique (10) selon l'une quelconque des revendications 2 à 5,
dans laquelle l'unité de commande (32) maintient l'état lié après avoir stocké des informations d'identification de l'autre machine de travail électrique (50) qui est liée dans le mode de fonctionnement lié qui est l'état lié,
si le commutateur est commuté depuis le mode de fonctionnement lié vers le mode de fonctionnement indépendant dans l'état lié, l'unité de commande (32) annule les informations d'identification et déconnecte l'autre machine de travail électrique (50) qui est en communication.

7. Machine de travail électrique (10) selon la revendication 6,
dans laquelle la machine de travail électrique (10) est dotée d'un bloc batterie (100, 100A) qui peut être détaché et qui fournit une puissance au moteur (15), et
à un moment où le bloc batterie (100, 100A) est enlevé dans l'état lié, une machine de travail électrique (50) externe qui est en communication est déconnectée, et à un moment où un autre bloc batterie (100, 100A) est installé, une autre recherche d'une autre machine de travail électrique (50) qui peut être liée est lancée.

8. Machine de travail électrique (10) selon l'une quelconque des revendications 1 à 7,
dans laquelle la machine de travail électrique (10) est dotée d'un bloc batterie (100, 100A) qui peut être détaché et qui fournit une puissance au moteur (15), l'unité de communication (34) étant prévue dans le bloc batterie, et
l'unité de commande (32) effectue une communication sans fil avec l'autre machine de travail électrique (50) via l'unité de communication (34) dans le bloc batterie (100, 100A).
